# NEUE EUROPÄISCHE PATENTSCHRIFT

(11) **EP 0 095 582 B2**
(45) Veröffentlichungstag und Bekanntmachung des Hinweises auf die Entscheidung über den Einspruch: **03.08.1994**
(45) Hinweis auf die Patenterteilung: 30.12.1986
(21) Anmeldenummer: 83104155.3
(22) Anmeldetag: 28.04.1983
(51) Int. Cl.: F16L 55/02, F01N 1/24

(54) **Schallgedämpfter Strömungskanal und Verfahren zu seiner Herstellung**
Sound insulated flow channel and method of making the same
Canalisation insonorisée et procédé de fabrication

(30) Priorität: 27.05.1982 DE 3220023
(43) Veröffentlichungstag der Anmeldung: 07.12.1983
(73) Patentinhaber: Cellofoam Deutschland GmbH, D-88382 Biberach (DE)
(72) Erfinder: Breitscheidel, Hans-Ulrich, D-5200 Siegburg (DE); Lorry, Cosmas, D-5216 Niederkassel (DE); Rehlen, Helmut, D-7951 Ingoldingen (DE); Roellinghoff, Jürgen, D-7950 Mettenberg (DE)
(74) Vertreter: Klingseisen, Franz, Dipl.-Ing.

(56) Entgegenhaltungen:
- CH-A- 439 569
- DE-A- 1 924 734
- DE-A- 2 437 947
- DE-A- 2 609 872
- DE-A- 2 659 551
- DE-A- 2 749 665
- DE-A- 2 930 162
- DE-A- 2 952 600
- DE-C- 2 408 028
- GB-A- 1 510 717
- US-A- 3 174 682
- US-A- 3 174 682
- AUTOMATION, Band 21, Nr. 4, April 1974, Seite 257, Cleveland, USA, "Foam cushions sound"

## Beschreibung

Die Erfindung bezieht sich auf einen schallgedämpften Strömungskanal und ein Verfahren zu seiner Herstellung.

Der Einsatz von Kunststoffen und Schaumkunststoffen in der Raum- und Bauakustik ist seit langem bekannt, wir verweisen beispielsweise auf die Zeitschrift "Kunststoffe" Band 43, 1953, Heft 11, Seite 446 bis 454, insbesondere Seite 448. Ein wesentliches Problem ist die Schallschluckung, d. h. die Vernichtung von Schallenergie zur Senkung des Schallpegels im Hörbereich. Überwiegend werden hierzu poröse Materialien benutzt wie Faserstoffplatten und Gesteinfasermatten. Auch Schaumstoffe eignen sich bedingt für raumakustische Zwecke, wobei bei porösen Schaumstoffplatten die Werte des Schallschluckgrades bei tiefen Frequenzen klein sind und mit wachsender Frequenz etwas ansteigen. Bei porösen Schallschluckern beruht die Absorption des Schalles auf der Reibung der schwingenden Luft an den Porenwänden. Bei Schaumstoffen mit geschlossenen Zellen geht eine Absorption auf innere Energieumwandlung in der Schicht zurück, da die sogenannten geschlossenzelligen Schaumstoffe in der Regel 20 bis 30 % offene Zellen enthalten, die ebenfalls absorbieren, jedoch geringer als bei einem sogenannten offenzelligen Schaumstoff.

In der DE-A-26 09 872 ist z. B. ein Absorbtionsschalldämpfer für Strömungskanäle beschrieben, bei dem als absorbtionswirksames Element ein mit Punktmassen belastetes Flächengebilde aus geschlossenzelligem Weichschaum eingesetzt wird, das zwischen Strömungskanal und zusätzlichen von der Strömung nicht durchflossenen Hohlräumen angeordnet ist. Hierbei wird der Strömungskanal selbst aus Blechwänden, Kunststoffwänden o. dgl. gebildet.

Es hat sich jedoch herausgestellt, daß geschlossenzellige Weichschäume nicht die mit offenzelligen Schäumen erzielbare hohe Schalldämpfung erreichen.

Nicht in jedem Fall ist es zweckmäßig und auch vom Raum her möglich, einen Absorbtionsschalldämpfer in einen Strömungskanal einzubauen. Insbesondere bei gekrümmt verlaufenden Strömungskanälen oder bei Strömungskanälen mit sich verändernden Querschnitten ist es schwierig, eine geeignete Form eines Absorbtionsschalldämpfers zu finden. Zur Verminderung der Schallübertragung in Strömungskanälen beispielsweise Zu- und Abluftkanälen, Lüftungskanälen in Kraftfahrzeugen bei Klimaanlagen usw. wird erfindungsgemäß ein schallgedämpfter Strömungskanal mit einer inneren Schicht aus offenzelligem, elastischem Weich-Schaumstoff vorgeschlagen, wobei als äußere Schicht ein elastischer, thermoplastischer, überwiegend geschlossenzelliger Schaumstoff verwendet wird, der eine Dichte von 70 bis 200 kg/m³, vorzugsweise 100 bis 150 kg/m³ aufweist.

Der erfindungsgemäß gebildete Strömungskanal ist selbsttragend und formstabil und absorbiert die durch die strömende Luft übertragenen Geräusche. Des weiteren werden auch durch die erfindungsgemäße Verbunbmaterialkombination keine Abstrahlgeräusche durch evtl. Eigenschwingungen erzeugt. Des weiteren verhält die äußere Schicht sich schallneutral und beeinflußt die Schallabsorptionswirkung der inneren Schicht nicht negativ wie es beispielsweise harte Trägermaterialien tun. Die äußere Schicht des überwiegend geschlossenzelligen Schaumstoffes übernimmt im wesentlichen die Aufgabe der Formgebung und bleibenden Gestalt des Strömungskanals und vermeidet die Abstrahlung von Geräuschen bei evtl. Eigenschwingungen. Die innere Schicht aus einem offenzelligen Weichschaumstoff bildet im wesentlichen den Resonanzabsorber, wobei die akustische Wirkungsweise des noch teilweise luftdurchlässigen Schaumstoffes auf einer Überlagerung von Resonanzverhalten und der Energieumwandlung infolge Luftreibung in den offenen Schaumstoffzellen beruht.

Als offenzelliger Weichschaum wird bevorzugt ein Polyurethanweichschaumstoff einsetzt. Es sind jedoch auch andere elastische offenzellige Schaumstoffe einsetzbar, z. B. solche wie in der europäischen Patentanmeldung 0 043 052 beschrieben oder z. B. offenzellige Weich-PVC-Schaumstoffe.

Für die äußere Schicht kommen insbesondere elastische thermoplastisch verformbare überwiegend geschlossenzellige Schaumstoffe in Frage, insbesondere auf Polyolefinbasis. Hierbei zeigen die vernetzten Polyolefinschaumstoffe und zwar neben den elektronenstrahlvernetzten insbesondere die chemisch vernetzten Polyolefinschaumstoffe besondere Vorteile bei der Verformung zu den Strömungsquerschnitten, da sie eine hohe Formstabilität und Formtreue aufweisen und die Übertragung von Eigenschwingungen verhindern.

Der erfindungsgemäße schallgedämpfte Strömungskanal kann insbesondere in Bereichen der Führung von Frischluft oder temperierter Luft, beispielsweise anschließend an einen Ventilator zu einem nachfolgenden Raum mit definierter Ausströmöffnung eingesetzt werden. Je nach zu überbrückender Strecke durch den Strömungskanal kann dieser gerade, rohrförmig oder rechteckig verlaufen oder aber auch gekrümmt abgeknickt und mit sich erweiterndem oder verengendem Querschnitt. Hierbei übernimmt der erfindungsgemäß ausgebildete Strömungskanal nicht nur die Führung der Luft sondern er absorbiert auch die durch den Ventilator beispielsweise auf die strömende Luft übertragenen Geräusche. Ein besonders vorteilhaftes Anwendungsgebiet liegt im Kraftfahrzeugbereich, wo solche Strömungskanäle als schallgedämpfte Lüftungskanäle die Luft vom Ventilator in den Innenraum des Kraftfahrzeuges leiten.

Je nach Größe des zu erstellenden Strömungskanals werden bevorzugt für die äußere Schicht Schaumstoffbahnen einer Dicke von 3 bis 15 mm, vorzugsweise 4 bis 10 mm und für die innere Schicht Schaumstoffbahnen einer Dicke von 5 bis 50 mm, vorzugsweise 5 bis 15 mm durch z. B. Flammkaschieren miteinander verbunden und der Verbund bleibend in die Konfiguration des Strömungskanals geformt. Je nach Gestalt des Strömungskanals kann dieser aus zwei oder mehr und ggf. auch voneinander unterschiedlich geformten Teilen aus dem Schaumstoffverbund gebildet sein. Die Teile werden dann an den Fügestellen haftfest z. B. durch Verschweißen, Verkleben o. dgl. miteinander verbunden.

DerAbsorptionsbereich des offenzelligen Weichschaumstoffes ist auch abhängig von der Dicke der Schaumstoffschicht, je dicker die Schaumstoffschicht ist, desto mehr verschiebt sich der Absorptionsbereich zu den niedrigeren Frequenzen. Zur Optimierung der Absorption durch Resonanzwirkung ist vorgesehen, die freiliegende Schicht der inneren Schicht kontrolliert luftdurchlässig zu versiegeln, d. h. durch definierte Versiegelung eine definierte Luftdurchlässigkeit zu behalten beispielsweise mit einer glatten Oberfläche oder nach einem weiteren Vorschlag der Erfindung durch eine Profilierung, beispielsweise rautenförmig, tetraederförmig, genoppt, rillenförmig o. dgl. Durch die Profilierung ist es möglich, die Schallabsorption in vorgegebenen Frequenzbereichen zu optimieren. Durch die Strukturierung der Oberfläche wird eine Vergrößerung der Absorptionsfläche erreicht und damit eine Erhöhung der Schallschluckwirkung. Damit ist es zugleich möglich, auch bei dünneren Schichten der offenzelligen Weichschaumschicht gute Schallabsorptionswerte im mittleren und hohen Frequenzbereich zu erzielen bzw. gezielt in bestimmten Frequenzbereichen eine optimale Absorption zu erreichen. Je dichter die Oberfläche versiegelt ist, desto mehr verlagert sich die Schallabsorption zu den niedrigeren Frequenzen. Außerdem bewirkt die Versiegelung auch eine verbesserte schmutzabweisende Oberfläche.

Um die Absorption in den unteren und mittleren Frequenzbereichen, d.h. insbesondere unter2 000 hz zu erhöhen, muß in diesem Bereich eine Resonanzwirkung erzielt werden, beispielsweise ist das möglich durch Erhöhung der Dichte der Zellen, wie durch eine erhöhte Versiegelung der Oberfläche.

Durch eine Profilierung bzw. Strukturierung der Oberfläche der inneren Schicht ist es erfindungsgemäß möglich, die freiliegende Oberfläche unterschiedlich zu verformen und damit unterschiedliche Oberflächendichten bzw. Dichtzelligkeit der inneren Schicht zu erreichen. Entsprechend den Verhältnissen der Flächenbereiche bzw. Schichtbereiche zueinander mit höherer Dichte und geringerer Dichte ist es möglich. Resonanzwirkung in gezielten Frequenzbereichen nach Wunsch für den Strömungskanal zu ermöglichen. Damit ist eine optimale Schalldämpfung möglich.

Insbesondere sogenannte versiegelte oder verhautete Polyurethanschaumstoffe, wie z. B. nach dem in der deutschen Patentanmeldung 31 12 883 beschriebenen Verfahren kontinuierlich hergestellte Schaumstoffbahnen eignen sich für die Schallabsorption und zum Einsatz bei dem erfindungsgemäßen Strömungskanal.

Ein bevorzugtes Verfahren zum Herstellen eines schalldämpfenden Strömungskanals gem. der Erfindung sieht vor, daß eine elastische thermoplastische überwiegend geschlossenzellige Schaumstoffbahn kontinuierlich mit einer offenzelligen elastischen Weichschaumstoffbahn flächig haftfest miteinander verbunden wird, beispielsweise durch Flammkaschieren, jedoch sind auch Verbindungen mittels Haftvermittlern je nach gewählten Schaumstoffen möglich. Aus dem so hergestellten Verbund werden Zuschnitte entsprechend der Konfiguration des Strömungskanals ausgeschnitten bzw. gestanzt und dann die Zuschnitte auf eine ausreichende Temperatur für eine bleibende Verformung des elastischen thermoplastischen geschlossenzelligen Schaumstoffes der Außenschicht, jedoch vorzugsweise unterhalb einer eine bleibende Verformung des offenzelligen Schaumstoffes bewirkender Temperatur erwärmt und danach in die gewünschte Form bzw. Teilformen des Strömungskanals gepreßt und ggf. die Teilformen zum Strömungskanal zusammengefügt und an den Fügestellen haftfest, beispielsweise durch Verschweißen, miteinander verbunden. Die Zuschnitte werden bevorzugt auf eine Temperatur von 140 bis 180 °C erwärmt. Bei dieser Temperatur sind die thermoplastischen geschlossenzelligen Schaumstoffe, die beispielsweise auf Polyolefinbasis bereits genügend plastisch, um im Preßverfahren bleibend verformt zu werden. Bei diesen Temperaturen ist jedoch ein offenzelliger Weichschaumstoff auf Basis Polyurethan noch nicht so beeinträchtigt, daß er sich bleibend verformt, sondern er stellt sich nach Abkühlung elastisch wieder zurück.

Es ist sehr wichtig, daß die innere Schicht keine bleibende Verformung erfährt und insbesondere nicht gestaucht wird, da sonst die akustische Wirkung, d. h. die Schallabsorbtion erheblich beeinträchtigt würde. Der für die äußere Schicht gewählte Schaumstoff muß eine solche Steifigkeit auch nach der Verformung aufweisen, daß er die Rückstellelastizität der inneren Schicht auffängt.

Eine Möglichkeit der Formgebung des Verbundes zum Strömungskanal ist die Anwendung von Preßformen mit Patrize und Matrize.

Eine weitere Möglichkeit zum Herstellen der erfindungsgemäßen schallgedämpften Strömungskanäle sieht vor, daß Zuschnitte aus überwiegend geschlossenzelligen Schaumstoffbahnen entsprechend der Form des Strömungskanals hergestellt und unter Anwendung von Druck und Wärme, z. B. nach dem Vakuumtiefziehverfahren, zu dem gewünschten Formteil bzw. Formteilen geformt werden, dann Zuschnitte aus offenzelligen Schaumstoffbahnen entsprechend den gewünschten Formen hergestellt und rückseitig mit einem Kleber beschichtet werden, dann die kleberbeschichteten Zuschnitte in die entsprechenden Formteile eingelegt und mittels Druck eingeformt und verbunden werden, ggf. zwei oder mehr Formteile zu einem Strömungskanal zusammengesetzt und entlang der Ränder durch Schweißen oder Kleben und/oder mechanische Befestigungsmittel miteinander verbunden werden. Hierbei werden geeignete Kleber zum Verkleben von vernetzten Polyolefinschaumstoffen und PU-Schaumstoffen beispielsweise auf Basis von Polyurethan verwendet. Als Befestigungsmittel dienen beispielsweise Klammern oder Profilleisten.

In der Zeichnung ist in den Figuren die Erfindungs beispielhaft erläutert. Es zeigt
Figur 1 im Querschnitt den Aufbau des Verbundes für die Wände des Strömungskanals,
Figur 2 eine Ansicht eines Strömungskanals und
Figuren 3 und 4 die Einström- und Ausströmöffnung des Strömungskanals nach Fig. 2,
Figuren 5 und 6 den Schallabsorptionsgrad von offenzelligen Polyurethan-Weichschaumstoffen bei verschiedenen Frequenzen und bei verschiedener Oberflächengestalt.

Die Wände des erfindungsgemäßen schallgedämpften Strömungskanals sind aus einem Verbund aufgebaut, wobei die äußere Schicht 1 aus einem überwiegend geschlossenzelligen elastischen thermoplastischen Schaumstoff besteht. Die innere Schicht 2, die überwiegend die Aufgabe der Schallabsorbtion übernimmt, besteht aus einem offenzelligen Weichschaumstoff, beispielsweise Polyurethanweichschaum. Die beiden Schichten 1 und 2 sind beispielsweise durch Flammkaschieren miteinander verbunden. Es ist auch möglich, sie mittels eines Haftvermittlers zu verbinden. Es ist auch denkbar, bei sehr großen Strömungskanälen zwischen den Schichten 1 und 2 noch eine Verstärkungsschicht, beispielsweise ein Gelege, Gewebe oder Gewirke aus Textil und/oder Glasfasern einzubauen. Die innere Schicht ist auf der freien Oberfläche, an der die Luft entlanggeführt wird, versiegelt u. ggf. profiliert ausgebildet, um die Schallabsorbtionsfläche zu vergrößern. Diese profilierte Oberfläche 3 kann beispielsweise genoppt sein oder rautenförmig unterteilt. Die Tiefe der Profilierung 4 wird bevorzugt im Bereich zwischen 0,5 und 5 mm, derAbstand der Wellenberge bzw. Täler 5 voneinander in allen Richtungen zwischen 5 und 20 mm liegen. Die Gestaltung der Oberfläche, ob eben oder profiliert, hängt weitgehend von der Strömungsgeschwindigkeit und der Art der Geräusche, die absorbiert werden sollen, ab. Sie kann rechnerisch bzw. in entsprechenden Prüfungsanordnungen ermittelt werden. Die profilierte Oberfläche istbevorzugtleichtversiegelt,jedoch in einer Weise, daß sie noch luftdurchlässig verbleibt, zusätzlich kann sie, wie dargestellt, profiliert sein.

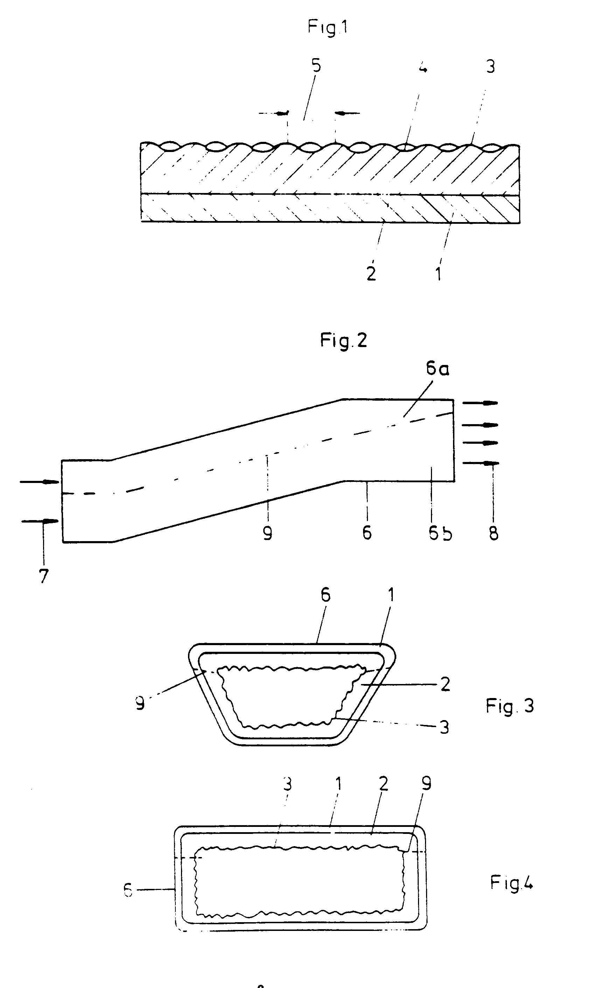

In der Fig. 2 ist ein Strömungskanal 6 dargestellt, der beispielsweise als schalldämmender Lüftungskanal in einem Kraftfahrzeug zwischen nicht dargestelltem Ventilator im Bereich der Lufteinströmung 7 und dem Kraftfahrzeuginnenraum im Bereich der Luftausströmung 8 angeordnet ist. Der dargestellte Strömungskanal 6 weist eine zweifach abgewinkelte Gestalt entsprechend den Raumverhältnissen des Kraftfahrzeuges auf und ist aus zwei Halbschalen 6a, 6b, die jedoch unterschiedlich konfiguriert sind, zusammengesetzt.

Im Bereich der Fügenaht 9 sind die Halbschalen miteinander verschweißt.

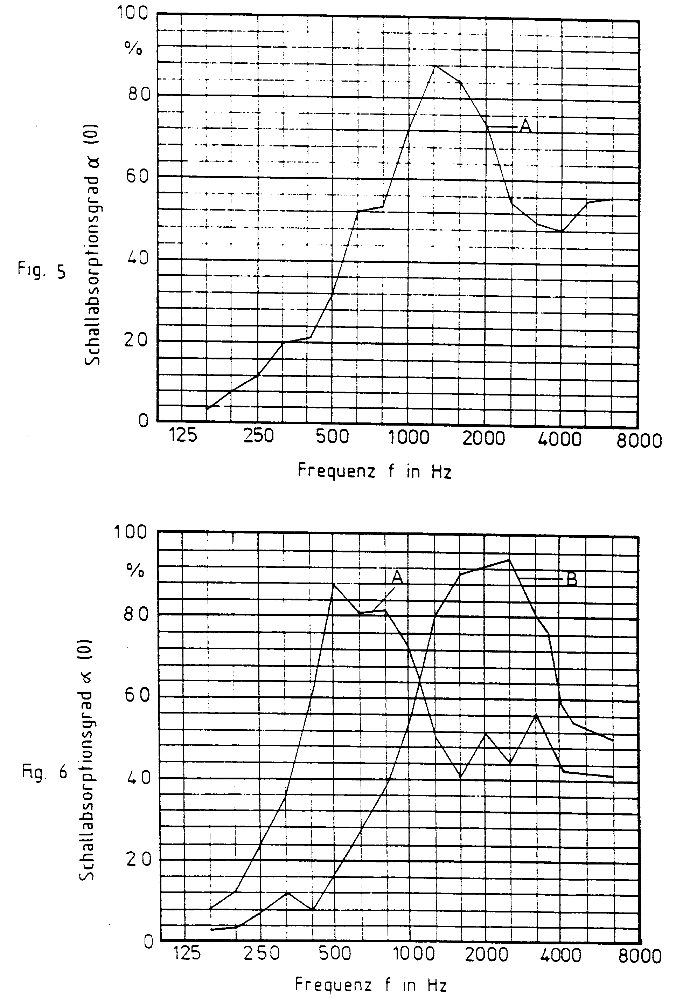

In der Figur 3 ist die Einströmöffnung dargestellt, die direkt an den Ventilator anschließt für die Lufteinströmung 7 und in der Fig. 4 die vergrößerte Ausströmöffnung.

Mit dem erfindungsgemäßen Verfahren und Aufbau eines Verbundmaterials können schallgedämpfte Strömungskanäle beliebiger Form entsprechend den Erfordernissen hergestellt werden. Die bevorzugten Frequenzbereiche für die Schallabsorbtion können durch die Wahl der Materialstärken sowie die entsprechende Oberflächenversiegelung und ggf. Profilierung festgelegt werden. Der erfindungsgemäße schallgedämpfte Strömungskanal bedarf keiner zusätzlichen äußeren Umhüllungen, sondern stellt ein sehr leichtes Bauteil dar, das problemlos angeschlossen werden kann.

Es ist jedoch auch möglich, den schallgedämpften Strömungskanal außenseitig mit einer Folie abzudecken oder in ein weiteres Bauteil je nach Bedarf einzubauen.

In den Figuren 5 und 6 ist die gezielte Schallabsorption, die mit der inneren Schicht 2 mit geeignet ausgebildeter Oberfläche erzielt werden kann, beispielhaft dargestellt, gemessen im Kundtschenrohr. Fig. 6 zeigt den Schallabsorptionsgrad bei verschiedenen Frequenzen eines offenzelligen Polyurethan-Weichschaumstoffes einer Rohdichte von 25 kg/m³ bei einer Materialdicke von 15 mm - Kurve B - und einer Materialdicke von 30 mm - Kurve A. Die Oberfläche des Polyurethan-Weichschaumstoffes ist versiegelt, jedoch entsprechend dem gewünschten und dargestellten Resonanzspektrum in vorgegebenem Umfang luftdurchlässig. Es ist erkennbar, wie das Resonanzmaximum mit der zunehmenden Schaumdicke sich zu tieferen Frequenzen verlagert, bei gleicher Oberflächenbehandlung.

In der Fig. 5 ist der Schallabsorptionsgrad eines offenzelligen Polyurethan-Weichschaumstoffes einer Rohdichte von 25 kg/m³ mit einer Materialdicke von 15 mm - Kurve A- dargestellt. Die Oberfläche ist durch rautenförmige Profilierung vergrößert und gleichzeitig durch die Profilierung unterschiedlich stark versiegelt bzw. verdichtet. Die Rautenkanten sind jeweils ca. 8 mm lang, weisen nahezu quadratische Form auf, die zwischen den Rauten verlaufenden Vertiefungen mit höherer Verdichtung sind ca. 2 mm breit und 1.5 mm tief. Es wird im Vergleich zu Fig. 6 deutlich, wie sich das Resonanzoptimum der Kurve B von Fig. 6 von den höheren Frequenzen durch die Profilierung zu niedrigeren Frequenzen verschieben läßt.

## Patentansprüche

1. Schallgedämpfter Strömungskanal mit einer inneren Schicht aus offenzelligem, elastischem Weich-Schaumstoff, dadurch gekennzeichnet, daß als äußere Schicht ein elastischer, thermoplastischer, überwiegend geschlossenzelliger Schaumstoff verwendet wird, wobei die äußere Schicht aus einem Schaumstoff einer Dichte von 70 bis 200 kg/m³, vorzugsweise 100 bis 150 kg/m³ gebildet ist.

2. Strömungskanal nach Anspruch 1, dadurch gekennzeichnet, daß die äußere Schicht einen vernetzten Polyolefinschaumstoff enthält.

3. Strömungskanal nach der Ansprüches 1 oder 2, dadurch gekennzeichnet, daß die innere Schicht aus einem Polyurethan-Weichschaumstoff gebildet ist.

4. Strömungskanal nach einem der Ansprüche 1 bis 3 dadurch gekennzeichnet, daß als äußere Schicht Schaumstoffbahnen einer Dicke von 3 bis 15 mm, vorzugsweise 4 bis 10 mm und für die innere Schicht Schaumstoffbahnen einer Dicke von 5 bis 50 mm, vorzugsweise 5 bis 15 mm flächig miteinander verbunden sind, beispielsweise durch Flammkaschieren und der Verbund bleibend in die Konfiguration des Strömungskanals geformt ist.

5. Strömungskanal nach einem der Ansprüche 1 bis 4, dadurch gekennzeichnet, daß er aus einem oder zwei oder mehr ggf. voneinander unterschiedlich geformten Teilen aus dem Schaumstoffverbund gebildet ist.

6. Strömungskanal nach einem der Ansprüche 1 bis 5, dadurch gekennzeichnet, daß die freiliegende Oberfläche der inneren Schicht kontrolliert luftdurchlässig versiegelt ist.

7. Strömungskanal nach einem der Ansprüche 1 bis 6, dadurch gekennzeichnet, daß die frei liegende Oberfläche der inneren Schicht mit einer Profi lierung beispielsweise rautenförmig, tetraederförmig, genoppt, rillenförmig o. dgl. zur Optimierung der Schallabsorption in vorgebenen Frequenzbereichen versehen ist.

8. Strömungskanal nach einem der Ansprüche 1 bis 7, dadurch gekennzeichnet, daß die innere Schicht unterschiedliche Dichten aufweist.

9. Verfahren zum Herstellen eines schalldämpfenden Strömungskanals, nach einem der Ansprüche 1 bis 8 dadurch gekennzeichnet, daß eine elastische thermoplastische überwiegend geschlossenzellige Schaumstoffbahn kontinuierlich mit einer offenzelligen elastischen Weichschaumstoffbahn flächig haftfest miteinander verbunden wird, beispielsweise durch Flammkaschieren, aus dem so hergestellten Verbund Zuschnitte entsprechend der Konfiguration des Strömungskanals ausgeschnitten bzw. gestantzt werden, die Zuschnitte auf eine ausreichende Temperatur für eine bleibende Verformung des elastischen thermoplastischen geschlossenzelligen Schaumstoffes erwärmt und danach in die gewünschte Form bzw. Teilformen des Strömungskanals gepreßt werden und ggf. die Teilformen zum Strömungskanal zusammengefügt und an den Fügestellen haftfest, beispielsweise durch Verschweißen miteinander verbunden werden.

10. Verfahren nach Anspruch 9, dadurch gekennzeichnet, daß die Zuschnitte auf eine unterhalb einer eine bleibende Verformung des offenzelligen Schaumstoffes bewirkende Temperatur erwärmt werden.

11. Verfahren nach Anspruch 9 oder 10, dadurch gekennzeichnet, daß die Zuschnitte auf eine Temperatur von 140 bis 180 °C erwärmt werden.

12. Verfahren nach einem der Ansprüche 9 bis 11, dadurch gekennzeichnet, daß die erwärmten Zuschnitte in einer Preßform mit Patrize und Matrize geformt werden.

13. Verfahren zum Herstellen eines Strömungskanals nach einem der Ansprüche 1 bis 8, dadurch gekennzeichnet, daß Zuschnitte aus überwiegend geschlossenzelligen Schaumstoffbahnen entsprechend der Form des Strömungskanals hergestellt und unter Anwendung von Druck und Wärme, z. B. nach dem Vakuumtiefziehverfahren, zu dem gewünschten Formteil bzw. Formteilen geformt werden, dann Zuschnitte aus offenzelligen Schaumstoffbahnen entsprechend den gewünschten Formen hergestellt und rückseitig mit einem Kleber beschichtet werden, dann die kleberbeschichteten Zuschnitte in die entsprechenden Formteile eingelegt und mittels Druck eingeformt und verbunden werden, ggf. zwei oder mehr Formteile zu einem Strömungskanal zusammengesetzt und entlang der Ränder durch Schweißen oder Kleben und/oder mechanische Befestigungsmittel verbunden werden.

## Claims

1. Sound insulated flow channel with an inner layer of open celled elastic soft foam material, characterised in that an elastic, thermoplastic, predominantly closed celled foam material is used as outer layer, wherein the outer layer is formed of a foam material having a density of 70 to 200 kg/m³, preferably 100 to 150 kg/m³.

2. Flow channel according to claim 1 characterised in that the outer layer contains a cross-linked polyolefin foam material.

3. Flow channel according to claim 1 or 2, characterised in that the inner layer is formed from a polyurethane soft foam material.

4. Flow channel according to one of claims 1 to 3, characterised in that foam sheets of a thickness of 3 to 15 mm, preferably 4 to 10 mm as outer layer and, for the inner layer, foam sheets of a thickness of 5 to 50 mm, preferably 5 to 15 mm, are surface connected with one another, for example by flame laminating and the compo- site is permanently deformed into the configuration of the flow channel.

5. Flow channel according to one of claims 1 to 4, characterised in that it is formed from one or two or more shaped parts made from the foam composite, which parts are optionally different from one another.

6. Flow channel according to one of claims 1 to 5, characterised in that the exposed surface of the inner layer is sealed for controlled airthroughpas- sage.

7. Flow channel according to one of claims 1 to 6, characterised in that the exposed surface of the inner layer is provided with a profiling, for example diamond-shaped, tetrahedrally shaped, burled, fluted or the like for optimisation of the sound absorption in predetermined frequency ranges.

8. Flow channel according to one of claims 1 to 7, characterised in that the inner layer possesses variable thicknesses.

9. Process for the production of a sound insulated flow channel according to one of claims 1 to 8 characterised in that an elastic thermoplastic predominantly closed celled foam sheet material is continuously connected with an open celled elastic soft foam sheet by surface bonding with one another, for example by flame laminating, blanks corresponding to the configuration of the flow channel are cut out or stamped from the composite thus produced, the blanks are heated to a sufficient temperature for a permanent deformation of the elastic thermoplastic closed celled foam material and then are shaped into the desired shape or part shapes of the flow channel and, if appropriate, the shaped parts are joined together to produce the flow channel and are adhesively connected with one another at the joint positions, for example by welding.

10. Process according to claim 9, characterised in that the blanks are heated at a temperature below one causing a permanent deformation of the open celled foam material.

11. Process according to claim 9 or 10, characterised in that the blanks are heated to a temperature of 140to180°C.

12. Process according to one of claims 9 to 11 characterised in that the heated blanks are shaped in a mould with male and female parts.

13. Process for the production of a flow channel according to one of claims 1 to 8, characterised in that blanks are produced from predominantly closed celled foam sheets, corresponding to the shape of the flow channel, and are shaped with use of pressure and heat, for example by the deep drawing vacuum process, to the desired shaped part or shaped parts, then blanks are produced from open celled foam lengths corresponding to the desired shapes and are coated on their reverse side with an adhesive, then the adhesively coated blanks are laid in the corresponding shaped parts and are shaped by means of pressure and connected, if appropriate two or more shaped parts being combined to form a flow channel and being connected with one another along the edges by welding or glueing and/or mechanical fastening means.

## Revendications

1. Canal d'écoulement insonorisé avec une couche interne en mousse plastique souple élastique à cellules ouvertes, caractérisé par le fait qu'on utilise comme couche externe une mousse élastique, thermoplastique, principalement à cellules fermées, et par le fait que la couche externe est formée d'une mousse ayant une densité de 70 à 200 kg/m³, de préférence de 100 à 150 kg/m³.

2. Canal d'écoulement selon revendication 1, caractérisé par le fait que la couche externe contient une mousse de polyoléfine réticulée.

3. Canal d'écoulement selon revendications 1 ou 2, caractérisé par le fait que la couche interne est formée d'une mousse souple de polyuréthane.

4. Canal d'écoulement selon l'une des revendications 1 à 3, caractérisé par le fait que, comme couche externe, des feuilles de mousse ayant une épaisseur de 3 à 15 mm, de préférence de 4 à 10 mm, et, pour la couche interne, des feuilles de mousse ayant une épaisseur de 5 à 50 mm, de préférence de 5 à 15 mm, sont fixées les unes aux autres à plat, par exemple par doublage à la flamme, et le stratifié est moulé de manière permanente en la configuration du canal d'écoulement.

5. Canal d'écoulement selon l'une des revendications 1 à 4, caractérisé par le fait qu'il est formé d'une ou plusieurs pièces du stratifié de mousse, moulées en formes éventuellement différentes les unes des autres.

6. Canal d'écoulement selon l'une des revendications 1 à 5, caractérisé par le fait que la surface libre de la couche interne est scellée de façon à présenter une perméabilité à l'air contrôlée.

7. Canal d'écoulement selon l'une des revendications 1 à 6, caractérisé par le fait que la surface libre de la couche interne est munie d'un profilage, par exemple en losanges, en tétraèdres, en boutons, en strie, etc., pour l'optimisation de l'absorption acoustique dans des domaines de fréquence déterminés.

8. Canal d'écoulement selon l'une des revendications 1 à 7, caractérisé par le fait que la couche interne présente des densités différentes.

9. Procédé pour la fabrication d'un canal d'écoulement insonorisé, selon l'une des revendications 1 à 8 caractérisé par le fait qu'une feuille de mousse élastique thermoplastique, principalement à cellules fermées, est fixée à plat de manière adhérente, de façon continue, à une feuille de mousse souple, à cellules ouvertes, élastique, par exemple par doublage à la flamme, des découpes correspondant à la configuration du canal d'écoulement sont découpées ou matricées dans le stratifié ainsi fabriqué, les découpes sont chauffées à une température suffisante pour provoquer une déformation permanente de la mousse élastique thermoplastique à cellules fermées, puis pressées dans la forme ou les formes de parties désirées du canal d'écoulement, et le cas échéant les formes de parties sont assemblées en canal d'écoulement et sont fixées les unes aux autres de manière adhérente, à l'endroit des joints, par exemple par soudage.

10. Procédé selon la revendication 9, caractérisé par le fait que les découpes sont chauffées au-dessous d'une température provoquant une déformation permanente de la mousse à cellules ouvertes.

11. Procédé selon la revendication 9 ou 10, caractérisé par le fait que les découpes sont chauffées à une température de 140° à 180 °C.

12. Procédé selon l'une des revendications 9 à 11, caractérisé par le fait que les découpes chauffées sont moulées dans un moule de compression avec poinçon et matrice.

13. Procédé de fabrication d'un canal d'écoulement selon l'une des revendications 1 à 8, caractérisé par le fait que des découpes sont fabriquées à partir de feuilles de mousse à cellules principalement fermées selon la forme du canal d'écoulement, et sont moulées en utilisant la pression et la chaleur, par exemple par un procédé d'emboutissage sous vide, pour donner la ou les pièces moulées désirées, puis des découpes de feuilles de mousse à cellules ouvertes sont fabriquées suivant les formes souhaitées et enduites à l'envers d'une colle, puis les découpes enduites de colle sont introduites dans les pièces moulées correspondantes et sont moulées et fixées au moyen d'une pression, le cas échéant deux pièces moulées ou davantage sont assemblées en un canal d'écoulement et sont fixées le long de leurs bords par soudage ou collage et/ou par des moyens de fixation mécaniques.
